# EUROPÄISCHE PATENTSCHRIFT

(11) **EP 2 781 419 B1**
(45) Veröffentlichungstag und Bekanntmachung des Hinweises auf die Patenterteilung: **27.07.2016**
(21) Anmeldenummer: 14001080.2
(22) Anmeldetag: 24.03.2014
(51) Int. Cl.: B60T 8/17, E01C 19/00

(54) **Verfahren zum Bremsen eines selbstfahrenden Straßenfertigers oder Beschickers sowie Bremsanlage für einen selbstfahrenden Straßenfertiger oder Beschicker**
Method for braking a self-propelled road finisher or feeder and brake system for a self-propelled road finisher or feeder
Procédé de freinage d'une finisseuse de route automotrice ou d'un chargeur automoteur et installation de freinage d'une finisseuse de route automotrice ou d'un chargeur automoteur

(30) Priorität: 22.03.2013 DE 102013004936
(43) Veröffentlichungstag der Anmeldung: 24.09.2014
(73) Patentinhaber: Dynapac GmbH, 26203 Wardenburg (DE)
(72) Erfinder: Schwarting, Thorsten, 26842 Ostrhauderfehn (DE); Fischer, Stefan, 26215 Wiefelstede (DE); Fasche, Christian, 27793 Wildeshausen (DE)
(74) Vertreter: Möller, Friedrich

(56) Entgegenhaltungen:
- WO-A1-02/49896
- US-A1- 2009 256 415

## Beschreibung

Die Erfindung betrifft ein Verfahren zum Bremsen eines selbstfahrenden Straßenfertigers oder eines Beschickers gemäß dem Oberbegriff des Anspruchs 1. Weiterhin betrifft die Erfindung eine Bremsanlage für einen Straßenfertiger oder Beschicker gemäß dem Oberbegriff des Anspruchs 9.

Straßenfertiger und Beschicker sind üblicherweise selbstfahrend ausgebildet. Sie verfügen über ein Rad- oder Kettenlaufwerk mit mindestens einem angetriebenen Radpaar. Üblicherweise ist dazu jedem angetriebenen Rad sowohl beim Radfahrwerk als auch beim Kettenlaufwerk ein Hydraulikmotor oder auch ein Elektromotor zugeordnet, die ein Getriebe antreiben, das wiederum das jeweilige Rad antreibt.

Straßenfertiger und auch Beschicker verfügen über eine Vielzahl hydraulischer Antriebe mit entsprechenden Ventilen und auch hydraulischen Bremsen. Dementsprechend müssen bei Straßenfertigern und Beschickern viele vor allem hydraulische Leitungen und auch Bremsleitungen zu jedem angetriebenen Rad verlegt werden. Das erfordert einen großen Verlegeaufwand bei mehreren angetriebenen Rädern. Außerdem haben sich mit Bremsflüssigkeiten arbeitende Bremsanlagen im rauhen Betrieb von Straßenfertigern und Beschickern als störanfällig erwiesen. So wird beispielsweise durch das Dokument WO 02/49896 A1 ein Baufahrzeug beschrieben, dessen vier Antriebsräder jeweils eine Bremseinrichtung aufweist. Zum Betätigen dieser Bremseinrichtungen muss die Bedienperson auf ein Bremspedal treten. Um eine Redundanz des Bremssystems zu erzielen, sind dem Bremspedal drei gleichwertige Sensoren zugeordnet, die jeweils gleichermaßen die selbe Position des Bremspedals ermitteln und diese Information an eine Kontrolleinheit übertragen. Somit ist jeder einzelne Sensor jeweils über ein Datenübertragungsmittel mit der Kontrolleinheit zu verbinden, was wiederum einen erhöhten Verlegeaufwand bedeutet.

Der Erfindung liegt die Aufgabe zugrunde, ein Verfahren zum Bremsen eines selbstfahrenden Straßenfertigers und Beschickers und eine entsprechende Bremsanlage zu schaffen, die zuverlässig arbeiten und einfach installierbar sind.

Ein Verfahren zur Lösung dieser Aufgabe weist die Maßnahmen des Anspruchs 1 auf. Demnach ist es vorgesehen, die mindestens eine Bremseinrichtung von elektrischen Signalen zu steuern. Dadurch können für Bremsflüssigkeit vorgesehene Rohrleitungen ersetzt werden durch einfacher zu verlegende elektrische Leitungen. Die die Signale transportierenden elektrischen Leitungen sind auch weniger störanfällig als Rohrleitungen für Bremsflüssigkeit. Die Steuerung der Bremsanlage erfolgt dadurch zumindest größtenteils elektrisch und nicht mehr wie bisher bei Straßenfertigern und Beschickern üblich, hydraulisch. Dazu weist die Bremsanlage wenigstens eine ein Betätigungsmittel aufweisende Bremseinrichtung auf. Darüberhinaus ist es vorgesehen, dass ein Betätigungsweg des Betätigungsmittels von mindestens einem Sensor erfasst wird und der Betätigungsweg aufgeteilt wird in einen ersten Betätigungsweg und einen nachfolgenden zweiten Betätigungsweg, wobei längs des ersten Betätigungsweges und längs des zweiten Betätigungswegs getrennte, wegproportionale elektrische Signale von Sensoren erzeugt werden. Dadurch sind unterschiedliche Bremscharakteristiken realisierbar und insbesondere mehrere Bremseinrichtungen steuerbar. Beispielsweise kann über den ersten Betätigungsweg eine übliche Betriebsbremsung erfolgen, während über den zweiten Betätigungsweg eine Hilfsbremsung durchführbar ist. Die Hilfsbremsung kann beispielsweise dann vorgenommen werden, wenn die Betriebsbremse versagt. Denkbar ist es auch, die Hilfsbremsung vorzunehmen, wenn die Betriebsbremsung im Notfall allein nicht ausreicht. Bevorzugt werden vom Betätigungsmittel im Bereich des ersten Betätigungswegs und im Bereich des nachfolgenden zweiten Betätigungswegs unterschiedliche Bremseinrichtungen betätigt, vor allem Bremseinrichtungen mit anderem Bremsverhalten und anderer Bremsintensität.

Bevorzugt ist es vorgesehen, wenigstens ein Betätigungsmittel vorzusehen, an dem durch entsprechende Sensoren elektrische Signale erzeugt werden. Anhand der vom Betätigungsmittel kommenden elektrischen Signale wird dann die mindestens eine Bremseinrichtung gesteuert. Dadurch können die Betätigungsmittel in üblicher, den Bedienern von Straßenbaumaschinen vertrauten Weise aufgebaut sein. Die elektrischen Signale lassen sich mit einfachen Signalleitungen zu den üblichen Bremseinrichtungen, das heißt den eigentlichen Bremsen, oder diesen zugeordneten Aktuatoren bzw. Ventilen weiterleiten.

Weiterhin ist es bevorzugt vorgesehen, den jeweiligen Betätigungsweg des mindestens einen Betätigungsmittels von wenigstens einem Sensor zu erfassen, und zwar insbesondere wegproportional. Der Sensor erzeugt ein elektrisches Signal, das an eine Steuerung der Bremseinrichtung, beispielsweise einen Aktuator oder ein Ventil, übertragen wird.

Bei einer bevorzugten Ausgestaltung des Verfahrens werden am Betätigungsmittel redundante Signale erzeugt, beispielsweise durch mehrere dem jeweiligen Betätigungsmittel zugeordnete Sensoren. Das erhöht die Zuverlässigkeit der Bremsanlage. Bei mehreren redundanten Sensoren kann jedem Sensor eine eigene elektrische Leitung zur jeweiligen Bremseinrichtung zugeordnet sein. Die Bremsanlage arbeitet so auch dann noch zuverlässig, wenn ein Sensor oder eine elektrische Leitung defekt sind, beispielsweise durch Beschädigung.

Besonders vorteilhaft ist es, über den ersten Betätigungsweg des Betätigungsmittels getrennte elektrische Signale zu erzeugen. Es lassen sich so nicht nur unterschiedliche Bremseinrichtungen steuern; es ist auch eine Redundanz gegeben, wenn der dem ersten Bremsweg zugeordnete Sensor ausfällt oder seine Signalleitung zur jeweiligen Bremseinrichtung versagen sollte. Bei den Sensoren handelt es sich bevorzugt um wegproportionale Sensoren, die ein elektrisches Signal abgeben, das sich mit zunehmendem Betätigungsweg des Betätigungsmittels kontinuierlich ändert, beispielsweise zunimmt.

Nach einer weiteren alternativen Ausgestaltung des Verfahrens kann ein zusätzliches, arretierbares Betätigungsmittel vorgesehen sein. Hierbei handelt es sich zum Beispiel um eine sogenannte Feststellbremse. Bevorzugt wird vom arretierbaren Betätigungsmittel auch durch elektrische Signale eine Bremseinrichtung gesteuert. Hierbei kann es sich um die gleiche Bremseinrichtung handeln, die zur Hilfsbremsung verwendet wird.

Eine Bremsanlage zur Lösung der eingangs genannten Aufgabe weist die Merkmale des Anspruchs 7 auf. Demnach ist dem Betätigungsmittel wenigstens ein Sensor zur Erzeugung elektrischer Signale zugeordnet und über Signalleitungen, insbesondere elektrischer Leiter, der mindestens eine Sensor oder jeder Sensor mit der jeweiligen Bremseinrichtung oder einem Aktivierungsmittel für die Bremseinrichtung verbunden. Die jeweilige Bremseinrichtung wird so nicht mehr wie bisher hydraulisch, sondern elektrisch bzw. elektronisch gesteuert. Außerdem ist das mindestens eine Betätigungsmittel zur Erzeugung unterschiedlicher, aufeinanderfolgender, Betätigungswege ausgebildet. Dabei ist jedem Betätigungsweg mindestens ein eigener Sensor zugeordnet. Auf diese Weise können vom Betätigungsmittel, üblicherweise einem Bremspedal, verschiedene Bremsweisen oder Bremsarten mit elektrischen Signalen gesteuert werden. Vorzugsweise können von den unterschiedlichen Betätigungswegen verschiedene Bremseinrichtungen gesteuert werden. Beispielsweise kann es sich dabei um eine Bremseinrichtung zur Betriebsbremsung oder eine Bremseinrichtung zur Hilfsbremsung oder Notbremsung handeln. Die Bremseinrichtung für die Notbremsung oder Hilfsbremsung ist vorzugsweise dem zweiten Betätigungsweg zugeordnet. Denkbar ist es auch, über einen ersten Betätigungsweg nur die Betriebsbremsung zu steuern und über den zweiten Betätigungsweg die Betriebsbremsung zusammen mit der Hilfs- oder Notbremsung. Dadurch kann die Bremswirkung in Notfällen verstärkt werden.

Eine bevorzugte Weiterbildung der Bremsanlage sieht mindestens einen Controller vor, zu dem die Signale der Sensoren des Betätigungsmittels über elektrische Leitungen oder gegebenenfalls auch drahtlos übermittelt werden. Der Controller gibt an jede vorzugsweise in Abhängigkeit von den Signalen der Sensoren am Betätigungsmittel modifizierte Signale an die jeweilige Bremseinrichtung, vorzugsweise das Aktivierungsmittel wie zum Beispiel ein Hydraulikventil oder einen Magnetschalter, weiter. Der Controller nimmt eine Signalverarbeitung vor. Der Controller kann auch weitere Aufgaben übernehmen, beispielsweise die eines Antiblockiersystems oder einer Bremskraftverteilung auf die einzelnen angetriebenen Räder.

Bei einem Betätigungsmittel mit mehreren aufeinanderfolgenden, vorzugsweise getrennten, Betätigungswegen, vorzugsweise einer jedem Betätigungsweg zugeordneten Bremseinrichtung, sind von den elektrischen Signalen der Sensoren des Betätigungsmittels die verschiedenen Bremseinrichtungen steuerbar. Vorzugsweise werden dann von den Sensoren des Betätigungsmittels stammende elektrische Signale an unterschiedliche Controller geleitet, wobei dem jeweiligen Betätigungsweg mindestens ein eigener Controller zugeordnet ist. Dann wird auch jede der unterschiedlichen Bremseinrichtungen vom eigenen Controller gesteuert. Die Controller können miteinander kommunizieren, um insbesondere untereinander logische Abfragen vorzunehmen, die erforderlich sind, damit die verschiedenen Bremseinrichtungen koordiniert betätigbar sind.

Bei einer bevorzugt ausgestalteten Bremsanlage wird eine erste Bremseinrichtung, die vorzugsweise über den ersten Betätigungsweg betätigt und gesteuert wird, wobei es sich bevorzugt um eine Betriebsbremse handelt, gebildet durch eine hydraulische Umsteuerung des das jeweilige Rad antreibenden Hydraulikmotors und der pumpe. Während der Betriebsbremsung treibt dann jedes abzubremsende Rad den diesem zugeordneten Hydraulikmotor an, wodurch die zum Fahrantrieb dienende Hydraulikpumpe als Hydraulikmotor betrieben wird, der dann das Pumpenverteilergetriebe antreibt und den eigentlich zum Antrieb des Pumpenverteilergetriebes dienenden Verbrennungsmotor abbremst, wodurch eine Motorbremsung zustande kommt. Eine solche Bremsung reicht für die Betriebsbremsung aus, weil üblicherweise Straßenfertiger und auch Beschicker recht langsam fahren. Bei von Elektromotoren angetriebenen Rädern wird zur Betriebsbremsung der Elektromotor umgesteuert, so dass er als Generator arbeitet und der den Elektromotor beim Radantrieb mit elektrischer Energie versorgende Generator als Elektromotor betrieben wird.

Eine bevorzugt über den zweiten Betätigungsweg gesteuerte zweite Bremseinrichtung kann gebildet sein durch eine im Prinzip einer Kupplung entsprechende Bremseinrichtung, die dem Hydraulikmotor zum Antrieb des jeweiligen Rads bzw. dem zwischen dem Hydraulikmotor und dem Rad angeordneten Getriebe zugeordnet ist. Bei der Kupplung kann es sich um eine Lamellenkupplung oder auch eine Lamellenbremse handeln. Diese arbeitet anfänglich, das heißt zu Beginn des zweiten Betätigungswegs des Bremspedals, noch mit Schlupf, der bei zunehmendem zweiten Betätigungsweg abnimmt und schließlich am Ende des zweiten Betätigungswegs zu einer schlupffreien Abbremsung des Hydraulikmotors oder des Getriebes führen kann, was praktisch einer Vollbremsung entspricht, die bis zum Blockieren des anzutreibenden Rads führen kann.

Die zur Hilfsbremsung oder Notbremsung dienende Kupplung, insbesondere Lamellenkupplung oder Lamellenbremse, kann elektrisch betätigbar sein, ist bei einer vorteilhaften Ausgestaltung der Bremsanlage aber hydraulisch betätigbar. Dazu dient ein von den elektrischen Signalen des Betätigungsmittels bzw. dem Controller angesteuertes Hydraulikventil. Dieses Hydraulikventil kann dicht an der Kupplung sitzen, so dass die hydraulische Betätigung der Kupplung nur sehr kurze Hydraulikleitungen erfordert.

Die erfindungsgemäße Bremsanlage kann zusätzlich zum ein wegproportionales Bremsen erzeugendes Betätigungsmittel, beispielsweise Bremspedal, ein arretierbares Betätigungsmittel für eine Feststellbremse aufweisen. Auch dieses arretierbare Betätigungsmittel weist mindestens einen Sensor oder Schalter auf, dessen Signale elektrisch durch Leiter oder auch drahtlos mit dem der zweiten Bremseinrichtung zugeordneten Ventil bzw. den dem Ventil zugeordneten Controller geführt ist. Dadurch ist die Feststellbremse auch elektrisch steuerbar, insbesondere elektrisch betätigbar. Die Feststellbremse betätigt bevorzugt die Lamellenkupplung oder Lamellenbremse der Hilfsbremseinrichtung.

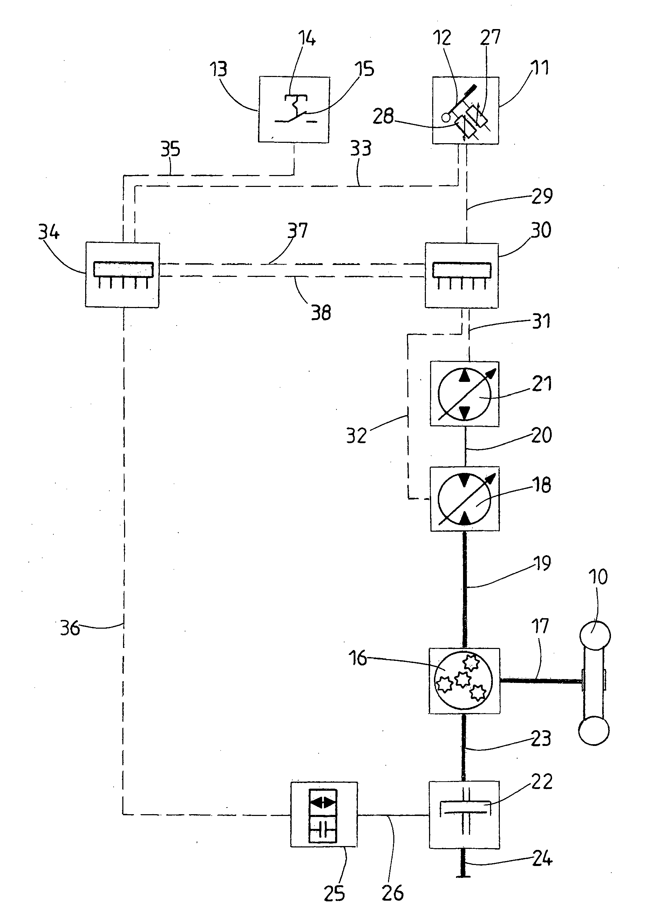

Ein bevorzugtes Ausführungsbeispiel der Erfindung wird nachfolgend anhand der Zeichnung näher erläutert. In der einzigen Figur der Zeichnung ist schematisch eine mögliche Ausgestaltung der erfindungsgemäßen Bremsanlage am Beispiel eines Straßenfertigers mit einem Radfahrwerk dargestellt.

In der Figur ist die Bremsanlage für ein angetriebenes Rad eines Radfahrwerks des Straßenfertigers dargestellt. Beim Straßenfertiger mit einem Kettenlaufwerk kann das in der Figur dargestellte Rad 10 ein Kettenrad zum Antrieb einer Gleiskette sein. Üblicherweise werden Straßenfertiger mit zwei Rädern 10 oder Kettenrädern angetrieben. Bei Straßenfertigern mit Radfahrwerken können auch mehr als zwei Räder 10 angetrieben sein. Stets ist jedem Rad 10 oder Kettenrad ein eigener Motor, und zwar ein Hydraulikmotor oder Elektromotor, vorzugsweise auch ein Getriebe, zugeordnet. Dann sind einige Komponenten der Bremsanlage, vor allem die Bremseinrichtung, an jedem einzelnen angetriebenen Rad 10 oder Kettenrad vorgesehen.

Die gezeigte Bremsanlage weist ein erstes Betätigungsmittel 11 auf, bei dem es sich beispielsweise um ein Bremspedal 12 handelt. Dieses Betätigungsmittel 11 gehört zur sogenannten Betriebsbremse. Die gezeigte Bremsanlage verfügt außerdem noch über ein zweites Betätigungsmittel 13, das arretierbar ist. Beispielsweise handelt es sich hierbei um einen Taster 14, der einen Schalter 15 betätigt. Dadurch stellt das zweite Betätigungsmittel 13 eine sogenannte Feststellbremse dar.

Das Rad 10 wird direkt von einem Getriebe 16 mechanisch angetrieben. Beim Getriebe 16 handelt es sich um ein solches mit einer großen Untersetzung. Vorzugsweise ist dazu das Getriebe 16 als Planetengetriebe ausgebildet. Durch eine mechanische Verbindung 17, beispielsweise eine Welle, wird das Rad 10 von der Antriebsseite des Getriebes 16 angetrieben. Das Getriebe 16 wiederum wird von einem Hydraulikmotor 18 angetrieben. Im gezeigten Ausführungsbeispiel ist der Hydraulikmotor 18 als Verstellmotor zur stufenlosen Drehzahländerung ausgebildet. Durch eine mechanische Verbindung 19 ist der Hydraulikmotor 18 an das Getriebe 16 angekoppelt. Der Hydraulikmotor 18 wird über Hydraulikleitungen 20 von einer Hydraulikpumpe 21 mit unter Druck stehendem Öl versorgt. Im gezeigten Ausführungsbeispiel ist auch die Hydraulikpumpe als Verstellpumpe ausgebildet, so dass ihre Drehzahl stufenlos verändert werden kann.

Dem Getriebe 16 ist an geeigneter Stelle eine als zweite Bremseinrichtung dienende schaltbare Kupplung 22 oder Bremse zugeordnet. Es kann sich dabei um eine Lamellenkupplung oder eine Lamellenbremse handeln, die hydraulisch oder elektrisch betätigbar, das heißt ein- und ausrückbar, ist und sowohl eine schlupffreie als auch eine schlupfbehaftete kraftschlüssige Kupplungsverbindung herstellen kann. Der Schlupf ist bevorzugt kontinuierlich veränderbar. Die Kupplung 22 ist mittels einer mechanischen Verbindung 23 mit dem Getriebe 16, und zwar insbesondere einem Abtriebsausgang, verbunden. Die zweite Kupplungshälfte ist starr durch beispielsweise eine unverdrehbare mechanische Verbindung 24.

Die hydraulische Bremse bzw. Kupplung 22 wird vorgesteuert durch ein elektrisch betätigbares Hydraulikventil 25, beispielsweise ein 2/2-Wegeventil. Das Hydraulikventil 25 ist über eine Hydraulikleitung 26 mit der Kupplung 22 oder der Bremse verbunden. Die Hydraulikleitung 26 kann entfallen, wenn das Hydraulikventil 25 direkt an der hydraulischen Lamellenkupplung oder Lamellenbremse angeordnet ist.

Der Betätigungsweg des Bremspedals 12 des ersten Betätigungsmittels 11 ist aufgeteilt in einen anfänglichen ersten Betätigungsweg und einen sich daran anschließenden zweiten Betätigungsweg. Beim Übergang des ersten Betätigungswegs zum zweiten Betätigungsweg kann ein Druckpunkt vorgesehen sein. Außerdem kann alternativ oder zusätzlich die Kraft zur Betätigung des Bremspedals 12 längs des zweiten Betätigungswegs größer sein als längs des ersten Betätigungswegs.

Zur Detektion des ersten und des zweiten Betätigungswegs sind dem Bremspedal 12 des Betätigungsmittels 11 zwei getrennte Sensoren 27, 28 zugeordnet. Die Sensoren 27, 28 sind so ausgebildet, dass sie wegproportionale elektrische Signale erzeugen. Es kann sich dadurch bei den Sensoren 27, 28 um Potentiometer oder Wegaufnehmer handeln. Bevorzugt sind alle Sensoren 27, 28 doppelt vorhanden, so dass, im Falle des Betätigungsmittels 11 dem Bremspedal 12 vier Sensoren 27, 28 zugeordnet werden, und zwar zwei für den ersten Betätigungsweg und zwei für den zweiten Betätigungsweg. Dadurch wird eine Redundanz für den Ausfall oder das Versagen eines Sensors 27, 28 geschaffen. Die redundanten Sensoren 27, 28 sind derart logisch verknüpft, dass ein eindeutiges Signal vorliegt, wenn alle Sensoren 27, 28 intakt sind, aber auch dann, wenn ein Sensor 27 oder 28 ausfällt.

Beim zweiten Betätigungsmittel 13 für die Feststellbremse ist dem Taster 14 ein Schalter 15 zugeordnet. Der Schalter 15 wirkt praktisch als ein Sensor, indem er detektiert, ob er offen ist bei unbetätigter Feststellbremse oder geschlossen ist bei betätigter und arretierter Feststellbremse. Es können dem Taster 14 zur Schaffung einer Redundanz auch zwei gleiche Schalter 15 zugeordnet sein. Diese sind auch logisch derart miteinander verknüpft, dass sowohl bei der Funktion beider Schalter 15 als auch bei der Funktion nur eines Schalters 15 ein eindeutiges elektrisches Signal erzeugt wird.

Vom dem ersten Betätigungsweg des Bremspedals 12 zugeordneten Sensor 27 ist eine vorzugsweise von einem elektrischen Leiter gebildete Signalleitung 29 zu einem Controller 30 geführt. Der Ausgang des Controllers 30 ist über eine Signalleitung 31 mit der Hydraulikpumpe 21 und mit einer anderen Signalleitung 32 mit dem Hydraulikmotor 18 verknüpft, nämlich elektrisch verbunden. Bei mehreren redundanten Sensoren 27 des ersten Betätigungsmittels 11 können sämtliche Sensoren 27 mit der gleichen, einzigen Signalleitung 29 mit dem Eingang des Controllers 30 verbunden sein. Bevorzugt ist dabei jedem Sensor 27 mindestens eine eigene Signalleitung 29 zugeordnet, um auch insoweit Redundanzen zu schaffen. Auch die Signalleitungen 31, 32 können mehrfach, also redundant, zum Hydraulikmotor 18 und zur Hydraulikpumpe 21 geführt sein.

Dem dem zweiten Betätigungsweg des Bremspedals 12 zugeordneten Sensor 28 ist eine auch als elektrischer Leiter ausgebildete Signalleitung 33 zugeordnet, die zum Eingang eines zweiten Controllers 34 geführt ist. Bei mehreren Sensoren 28 für den zweiten Betätigungsweg des Bremspedals 12 können die Signale der Sensoren 28 auch über mehrere Signalleitungen 33 zum Eingang des Controllers 34 geführt sein.

Vom durch den Taster 14 des Betätigungsmittels 13 betätigten Schalter 15 führt eine weitere zur elektrischen Signalübermittlung dienende Signalleitung 35 zum Eingang des Controllers 34. Bei mehreren Schaltern 15 können auch mehrere Signalleitungen 35 vorhanden sein, nämlich eine Signalleitung 35 pro Schalter 15.

Ein Signalausgang des Controllers 34 ist über mindestens eine elektrische Signalleitung 36 mit dem elektrisch ansteuerbaren Hydraulikventil 25 verbunden.

Es ist weiterhin vorgesehen, dass die Controller 30 und 34 über elektrische Signale miteinander kommunizieren durch in entgegengesetzte Richtungen laufende Signalleitungen 37 und 38.

Das erfindungsgemäße Verfahren wird nachfolgend unter Bezugnahme auf die in der Figur gezeigte Bremsanlage näher erläutert:
Das erste Betätigungsmittel 11 mit dem Bremspedal 12 ermöglicht in Abhängigkeit vom Betätigungsweg des Bremspedals 12 zwei unterschiedliche Bremsungen. Während das Bremspedal 12 über den anfänglichen ersten Betätigungsweg betätigt wird, erfolgt eine Betriebsbremsung. Durch Betätigen des Bremspedals 12 über den sich an den ersten Betätigungsweg anschließenden zweiten Betätigungsweg, der eine größere Pedalkraft erfordert, ist eine Hilfsbremsung möglich.

Die anfängliche Betriebsbremsung erfolgt durch eine Umsteuerung des Hydraulikmotors 18 und der Hydraulikpumpe 21, indem der Hydraulikmotor 18 als Hydraulikpumpe und die Hydraulikpumpe 21 als Hydraulikmotor betrieben wird. Die zum Betrieb des dann als Hydraulikpumpe betriebenen Hydraulikmotors 18 erforderliche Kraft stellt eine Bremskraft zum Abbremsen des Getriebes 16 mit dem damit verbundenen Rad 10 dar. Mit zunehmendem ersten Betätigungsweg des Bremspedals 12 wird die Förderleistung des zur Betriebsbremsung als Hydraulikpumpe betriebenen Hydraulikmotors 18 so verstellt, dass die Förderleistung zunimmt, wodurch die Antriebsleistung der beim Bremsen als Hydraulikmotor betriebenen Hydraulikpumpe 21 zunimmt und damit auch die Bremskraft steigt. Die entsprechende Verstellung der Hydraulikpumpe 21 und des Hydraulikmotors 18 wird vom Controller 30 anhand des sich mit dem Betätigungsweg des Bremspedals 12 proportional ändernden elektrischen Signals des mindestens einen Sensors 27 umgesetzt in die erforderlichen Signale zum elektrischen Verstellen des Hydraulikmotors 18 und/oder der Hydraulikpumpe 21.

Wird das Bremspedal 12 in den Bereich des zweiten Betätigungswegs gebracht, erzeugt der mindestens eine Sensor 28 ein zum zweiten Betätigungsweg proportionales Signal, das über die Signalleitung 33 an den zweiten Controller 34 weitergegeben wird. Dieser Controller 34 erzeugt dann ein entsprechendes Ausgangssignal, das über die Signalleitung 36 an das elektrisch vorgesteuerte Hydraulikventil 25 übertragen wird. Dementsprechend wird das Hydraulikventil 25 derart elektrisch betätigt, dass über die Hydraulikleitung 26 die eine Hilfsbremse darstellende Kupplung 22 hydraulisch oder gegebenenfalls auch elektrisch betätigt wird. Die Kupplung 22 wird in Abhängigkeit vom zweiten Betätigungsweg des Bremspedals 12 hydraulisch betätigt, und zwar so, dass bei größer werdendem zweiten Betätigungsweg der Schlupf der Kupplung 22 kontinuierlich verringert wird, wodurch die Bremskraft der als Lamellenkupplung oder Lamellenbremse ausgebildeten Kupplung 22 zunimmt. Am Ende des zweiten Betätigungswegs kann durch vollständiges Öffnen des elektrisch betätigten Hydraulikventils 25 die Kupplung 22 hydraulisch soweit eingerückt sein, dass sie keinen Schlupf mehr aufweist und somit die als Hilfsbremse wirkende Kupplung 22 das Getriebe 16 mit dem diesem zugeordneten Rad 10 blockiert.

Die Feststellbremse wird über das Betätigungsmittel 13 betätigt. Dazu wird durch Drücken des Tasters 14 der mindestens eine Schalter 15 geschlossen. Dann wird über die Signalleitung 35 ein elektrisches Signal zum Controller 34 geleitet. Dieser setzt das Signal so um, dass über die Signalleitung 36 das elektrisch vorgesteuerte Hydraulikventil 25 vollständig öffnet und über die Hydraulikleitung 26 die Kupplung 22 hydraulisch eingerückt wird. Auf diese Weise wird über das zweite Betätigungsmittel 13 die als Feststellbremse dienende Kupplung 22 eingerückt und dadurch das Getriebe 16 und das damit über die mechanische Verbindung 17 direkt verbundene Rad 10 blockiert.

Das Lösen der Feststellbremse des zweiten Betätigungsmittels 13 und der Betriebsbremse und/oder Hilfsbremse des ersten Betätigungsmittels 11 führt in umgekehrter Reihenfolge zum Lösen der Bremsen, nämlich zum Auskuppeln der Kupplung 22 bzw. zur Rückgängigmachung der zum Bremsen erfolgenden Umkehrung der Betriebsweise des Hydraulikmotors 18 und der Hydraulikpumpe 21 und somit zur Wiederherstellung der zum Fahrbetrieb des Straßenfertigers üblichen Betriebsweise.

Beim Straßenfertiger mit einem Radfahrwerk, das zum Beispiel zwei angetriebene Räder 10 aufweist, ist jedem Rad 10 nicht nur ein Getriebe 16 zugeordnet, sondern auch mindestens ein Hydraulikmotor 18 und eine Kupplung 22. Alle beiden Hydraulikmotoren 18 können von der gleichen Hydraulikpumpe 21 mit Drucköl gespeist werden. Es ist auch denkbar, dem Hydraulikmotor 18 jedes angetriebenen Rads 10 eine eigene Hydraulikpumpe 21 zuzuordnen. Der jedem angetriebenen und bremsbaren Rad 10 zugeordnete Kupplung 22 kann ein gemeinsames elektrisch vorsteuerbares Hydraulikventil 25 zugeordnet sein, aber auch jede Kupplung 22 ein eigenes Hydraulikventil 25 aufweisen.

Die Betätigungsmittel 11 und 13 sind auch bei mehreren angetriebenen Rädern 10 nur einmal vorgesehen. Gleiches gilt für die Controller 30 und 34. Die gemeinsamen Controller 30 und 34 sorgen dafür, dass die Bremsen, und zwar sowohl die Betriebsbremse, als auch die Hilfsbremse und die Feststellbremse aller angetriebenen Räder 10 gleichzeitig und gleichermaßen abgebremst werden. Dabei können die Controller 30 und 34 gleichzeitig ein Antiblockiersystem realisieren.

Im Rahmen der Erfindung liegt auch eine von der Darstellung der Figur abweichende Bremsanlage. Es handelt sich hierbei um eine Bremsanlage für elektrisch angetriebene Räder 10. Beim elektrischen Antrieb jedes Rades 10 ist der beim hydraulischen Antrieb erforderliche Hydraulikmotor 18 ersetzt durch einen Elektromotor, während die Hydraulikpumpe 21 durch einen Generator ersetzt ist. Folglich wird jedes Rad durch einen Elektromotor und das hiermit über die mechanische Verbindung 19 verbundene Getriebe 16 einzeln angetrieben. Im Übrigen gleicht die Bremsanlage derjenigen der beigefügten Figur, ist also beim elektrischen Antrieb genauso aufgebaut wie beim hydraulischen Antrieb und verfügt auch über die gleiche Arbeits- und Funktionsweise.

Beim in der Figur gezeigten hydraulischen Antrieb wird bei der Betriebsbremsung der Hydraulikmotor 18 zur Hydraulikpumpe und die Hydraulikpumpe 21 zum Hydraulikmotor. Beim elektrischen Antrieb des jeweiligen Rades 10 wird der dem Hydraulikmotor entsprechende Elektromotor in einen Generatorbetrieb geschaltet und der der Hydraulikpumpe 21 entsprechende Generator elektromotorisch betrieben. Zur Betriebsbremsung wird dann vom abzubremsenden Rad 10 über das Getriebe 16 der als Generator betriebene Elektromotor angetrieben und dadurch elektrische Energie erzeugt, die den bei der Betriebsbremsung als Elektromotor betriebenen Generator antreibt. Der Generator erzeugt elektrische Energie, die für andere Antriebe des Straßenfertigers während der Betriebsbremsung verwendet werden kann. Elektrische Energie, die bei der Betriebsbremsung vom Generator erzeugt wird, kann aber auch zum Laden einer Batterie verwendet oder durch Widerstände abgebaut werden.

Auch bei elektrisch angetriebenen Rädern 10 können die Elektromotoren zum Antrieb jedes Rads 10 von einem gemeinsamen Generator mit elektrischer Energie versorgt werden oder jedem Elektromotor ein eigener Generator zugeordnet sein.

**Bezugszeichenliste:**

| | | | |
|---|---|---|---|
| 10 | Rad | 36 | Signalleitung |
| 11 | Betätigungsmittel | 37 | Signalleitung |
| 12 | Bremspedal | 38 | Signalleitung |
| 13 | Betätigungsmittel | | |
| 14 | Taster | | |
| 15 | Schalter | | |
| 16 | Getriebe | | |
| 17 | mechanische Verbindung | | |
| 18 | Hydraulikmotor | | |
| 19 | mechanische Verbindung | | |
| 20 | Hydraulikleitung | | |
| 21 | Hydraulikpumpe | | |
| 22 | Kupplung | | |
| 23 | mechanische Verbindung | | |
| 24 | mechanische Verbindung | | |
| 25 | Hydraulikventil | | |
| 26 | Hydraulikleitung | | |
| 27 | Sensor | | |
| 28 | Sensor | | |
| 29 | Signalleitung | | |
| 30 | Controller | | |
| 31 | Signalleitung | | |
| 32 | Signalleitung | | |
| 33 | Signalleitung | | |
| 34 | Controller | | |
| 35 | Signalleitung | | |

## Patentansprüche

1. Verfahren zum Bremsen eines selbstfahrenden Straßenfertigers oder Beschickers, wobei mindestens ein Rad (10) eines Radfahrwerks oder eine Kette eines Kettenlaufwerks von wenigstens einer wenigstens ein Betätigungsmittel (11, 13) aufweisenden Bremseinrichtung einer Bremsanlage abgebremst werden kann und die mindestens eine Bremseinrichtung von elektrischen Signalen gesteuert wird, **dadurch gekennzeichnet, dass** ein Betätigungsweg des Betätigungsmittels (11) von mindestens einem Sensor (27) erfasst wird und der Betätigungsweg aufgeteilt wird in einen ersten Betätigungsweg und einen nachfolgenden zweiten Betätigungsweg, wobei längs des ersten Betätigungsweges und längs des zweiten Betätigungsweges getrennte, wegproportionale elektrische Signale von Sensoren (27, 28) erzeugt werden.

2. Verfahren nach Anspruch 1, **dadurch gekennzeichnet, dass** die Bremsanlage wenigstens ein Betätigungsmittel (11, 13) aufweist, wo die elektrischen Signale erzeugt werden und anhand dieser elektrischen Signale die mindestens eine Bremseinrichtung elektrisch gesteuert wird.

3. Verfahren nach Anspruch 1 oder 2, **dadurch gekennzeichnet, dass** der mindestens eine Sensor (27) die elektrischen Signale erzeugt, die an eine Steuerung der mindestens einen Bremseinrichtung übertragen werden.

4. Verfahren nach einem der vorhergehenden Ansprüche, **dadurch gekennzeichnet, dass** redundante Signale erzeugt werden, vorzugsweise durch mehrere dem Betätigungsmittel (11, 13) zugeordnete Sensoren.

5. Verfahren nach einem der vorhergehenden Ansprüche, **dadurch gekennzeichnet, dass** mehrere, vorzugsweise zwei verschiedene, Bremseinrichtungen verwendet werden, wobei jede Bremseinrichtung von den elektrischen Signalen eines Betätigungswegs des Betätigungsmittels (11) gesteuert werden.

6. Verfahren nach einem der vorhergehenden Ansprüche, **dadurch gekennzeichnet, dass** ein zusätzliches, arretierbares (zweites) Betätigungsmittel (13) vorgesehen wird, das vorzugsweise durch elektrische Signale auf die dem zweiten Betätigungsweg des anderen Betätigungsmittels (11) zugeordnete Bremseinrichtung einwirkt, insbesondere diese Bremseinrichtung mit den elektrischen Signalen des zusätzlichen, arretierbaren (zweiten) Betätigungsmittels (13) steuert.

7. Bremsanlage für einen Straßenfertiger oder Beschicker, mit mindestens einer Bremseinrichtung und mit wenigstens einem Betätigungsmittel (11, 13) zum Betätigen der jeweiligen Bremseinrichtung, wobei dem Betätigungsmittel (11, 13) wenigstens ein Sensor (27, 28) und/oder Schalter (15) zugeordnet ist und über mindestens einen elektrischen Leiter der mindestens eine Sensor (27, 28) oder Schalter (15) mit der jeweiligen Bremseinrichtung oder einem Aktivierungsmittel für die jeweilige Bremseinrichtung verbunden ist, **dadurch gekennzeichnet, dass** das Betätigungsmittel (11) zur Erzeugung unterschiedlicher, aufeinanderfolgender Betätigungswege ausgebildet ist, wobei jedem Betätigungsweg zumindest ein eigener Sensor (27, 28) zugeordnet ist.

8. Bremsanlagen nach Anspruch 7, **dadurch gekennzeichnet, dass** mindestens ein Controller (30, 34) vorgesehen ist, zu dem jeweils Signalleitungen von den Sensoren (27, 28) bzw. Schalter (15) der Betätigungsmittel (11, 13) geführt sind und von den Controllern (30, 34) Signalleitungen an die mindestens eine Bremseinrichtung oder das Aktivierungsmittel geführt sind.

9. Bremsanlage nach einem der Ansprüche 7 und 8, **dadurch gekennzeichnet, dass** mehrere, vorzugsweise zwei Bremseinrichtungen vorgesehen sind, die von den elektrischen Signalen der Sensoren (27, 28) oder Schalter (15) steuerbar sind, vorzugsweise über Controller (30, 34).

10. Bremsanlage nach einem der Ansprüche 7 bis 9, **dadurch gekennzeichnet, dass** eine erste Bremseinrichtung, vorzugsweise eine Betriebsbremseinrichtung, gebildet ist durch einen Hydraulikmotor (18) oder Elektromotor zum Antrieb eines Getriebes (16) des jeweiligen Rades (10) des Radfahrwerks oder des jeweiligen Kettenrads des Kettenlaufwerks und vorzugsweise eine Hydraulikpumpe (21) oder einen Generator, und eine zweite Bremseinrichtung durch eine dem Getriebe (16) zugeordnete Kupplung, vorzugsweise eine Lamellenkupplung oder eine Lamellenbremse, gebildet ist.

11. Bremsanlage nach einem der Ansprüche 7 bis 10, **dadurch gekennzeichnet, dass** die Kupplung (22), insbesondere Lamellenkupplung oder Lamellenbremse, hydraulisch oder elektrisch betätigbar ist durch ein von den elektrischen Signalen des Betätigungsmittels (11, 13) bzw. des zwischengeschalteten Controllers (34) angesteuertes Hydraulikventil (25) oder einen Magneten.

12. Bremsanlage nach einem der Ansprüche 7 bis 11, **dadurch gekennzeichnet, dass** ein arretierbares (zweites) Betätigungsmittel (13) für eine Feststellbremse vorgesehen ist, das einen Sensor oder Schalter (15) aufweist, der über mindestens eine elektrische Signalleitung (35) zur zweiten Bremseinrichtung, vorzugsweise der Kupplung (22), bzw. dem der zweiten Bremseinrichtung zugeordneten Hydraulikventil (25) oder Controller (34) geführt ist.

## Claims

1. Method for braking a self-propelling road finisher or feeding appliance, wherein at least one wheel (10) of a wheeled undercarriage or a chain of a chain running gear unit can be braked by at least one braking device, having at least one activation means (11, 13), of a brake system, and the at least one braking device is controlled by electrical signals, **characterized in that** an activation travel path of the activation means (11) is sensed by at least one Sensor (27), and the activation travel path is divided into a first activation travel path and a subsequent second activation travel path, wherein electrical signals which are separated along the first activation travel path and along the second activation travel path and are proportional to the travel path are generated by sensors (27, 28).

2. Method according to Claim 1, **characterized in that** the brake system has at least one activation means (11, 13) in which the electrical signals are generated and the at least one braking device is controlled electrically on the basis of these electrical signals.

3. Method according to Claim 1 or 2, **characterized in that** the at least one sensor (27) generates the electrical signals which are transmitted to a controller of the at least one braking device.

4. Method according to one of the preceding claims, **characterized in that** redundant signals are generated, preferably by means of a plurality of sensors which are assigned to the activation means (11, 13).

5. Method according to one of the preceding claims, **characterized in that** a plurality of different braking devices, preferably two thereof, are used, wherein each braking device is controlled by the electrical signals of an activation travel path of the activation means (11).

6. Method according to one of the preceding claims, **characterized in that** an additional lockable (second) activation means (13) is provided which preferably acts by means of electrical signals on the braking device which is assigned to the second activation travel path of the other activation means (11), in particular controls this braking device with the electrical signals of the additional, lockable (second) activation means (13).

7. Brake system for a road finisher or feeding appliance, having at least one braking device and having at least one activation means (11, 13) for activating the respective braking device, wherein at least one sensor (27, 28) and/or switch (15) is assigned to the activation means (11, 13), and the at least one sensor (27, 28) or switch (15) is connected via at least one electrical conductor to the respective braking device or to an activation means for the respective braking device, **characterized in that** the activation means (11) is designed to generate different successive activation travel paths, wherein each activation travel path is assigned at least one separate sensor (27, 28).

8. Brake systems according to Claim 7, **characterized in that** at least one controller (30, 34) is provided, to which in each case signal lines from the sensors (27, 28) or switches (15) of the activation means (11, 13) are led, and signal lines are led from the controllers (30, 34) to the at least one braking device or the activation means.

9. Brake system according to one of Claims 7 and 8, **characterized in that** a plurality of braking devices, preferably two thereof, are provided which can be controlled by the electrical signals of the sensors (27, 28) or switches (15), preferably by means of controllers (30, 34).

10. Brake system according to one of Claims 7 to 9, **characterized in that** a first braking device, preferably a service braking device, is formed by means of a hydraulic motor (18) or electric motor for driving a transmission (16) of the respective wheel (10) of the wheeled undercarriage or of the respective chain wheel of the chain running gear unit and preferably a hydraulic pump (21) or a generator, and a second braking device is formed by a clutch, preferably a multi-disc clutch or a multi-disc brake, assigned to the transmission (16).

11. Brake system according to one of Claims 7 to 10, **characterized in that** the clutch (22), in particular multi-disc clutch or multi-disc brake, can be activated hydraulically or electrically by a hydraulic valve (25), actuated by the electrical signals of the activation means (11, 13) or of the intermediately connected controller (34), or a magnet.

12. Brake system according to one of Claims 7 to 11, **characterized in that** a lockable (second) activation means (13) is provided for a parking brake which has a sensor or switch (15) which is connected via at least one electrical signal line (35) to the second braking device, preferably the clutch (22) or the hydraulic valve (25), assigned to the second braking device, or controller (34).

## Revendications

1. Procédé de freinage d'un finisseur de routes ou d'un chargeur automoteur, au moins une roue (10) d'un mécanisme de déplacement à roues ou une chaîne d'un mécanisme de déplacement à chaînes pouvant être freinée par au moins un dispositif de freinage d'un système de freinage possédant au moins un moyen d'actionnement (11, 13) et l'au moins un dispositif de freinage étant commandé par des signaux électriques, **caractérisé en ce qu'**une course d'actionnement du moyen d'actionnement (11) est détectée par au moins un capteur (27) et la course d'actionnement est divisée en une première course d'actionnement et une deuxième course d'actionnement qui suit, des signaux électriques séparés, proportionnels à la course, étant générés par des capteurs (27, 28) le long de la première course d'actionnement et le long de la deuxième course d'actionnement.

2. Procédé selon la revendication 1, **caractérisé en ce que** le système de freinage possède au moins un moyen d'actionnement (11, 13) où sont générés les signaux électriques et l'au moins un dispositif de freinage est commandé électriquement à l'aide de ces signaux électriques.

3. Procédé selon la revendication 1 ou 2, **caractérisé en ce que** l'au moins un capteur (27) génère les signaux électriques qui sont transmis à une commande de l'au moins un dispositif de freinage.

4. Procédé selon l'une des revendications précédentes, **caractérisé en ce que** des signaux redondants sont générés, de préférence par plusieurs capteurs associés au moyen d'actionnement (11, 13).

5. Procédé selon l'une des revendications précédentes, **caractérisé en ce que** plusieurs, de préférence deux dispositifs de freinage différents sont utilisés, chaque dispositif de freinage étant commandé par les signaux électriques d'une course d'actionnement du moyen d'actionnement (11).

6. Procédé selon l'une des revendications précédentes, **caractérisé en ce qu'**il existe un (deuxième) moyen d'actionnement (13) supplémentaire pouvant être bloqué, lequel agit de préférence par des signaux électriques sur le dispositif de freinage associé à la deuxième course d'actionnement de l'autre moyen d'actionnement (11), notamment commande ce dispositif de freinage avec les signaux électriques du (deuxième) moyen d'actionnement (13) supplémentaire pouvant être bloqué.

7. Système de freinage pour un finisseur de routes ou un chargeur, comprenant au moins un dispositif de freinage et au moins un moyen d'actionnement (11, 13) destiné à actionner le dispositif de freinage correspondant, au moins un capteur (27, 28) et/ou commutateur (15) étant associé au moyen d'actionnement (11, 13) et ledit au moins un capteur (27, 28) ou commutateur (15) étant relié au dispositif de freinage correspondant ou à un moyen d'activation pour le dispositif de freinage correspondant par le biais d'au moins un conducteur électrique, **caractérisé en ce que** le moyen d'actionnement (11) est configuré pour générer des courses d'actionnement successives différentes, un capteur (27, 28) propre étant associé à chaque course d'actionnement.

8. Système de freinage selon la revendication 7, **caractérisé en ce qu'**il existe au moins un contrôleur (30, 34) auquel sont respectivement acheminées les lignes de signaux des capteurs (27, 28) ou du commutateur (15) du moyen d'actionnement (11, 13), et des lignes de signaux sont acheminées des contrôleurs (30, 34) à l'au moins un dispositif de freinage ou au moyen d'activation.

9. Système de freinage selon l'une des revendications 7 ou 8, **caractérisé en ce qu'**il existe plusieurs, de préférence deux dispositifs de freinage qui peuvent être commandés par les signaux électriques des capteurs (27, 28) ou du commutateur (15), de préférence par le biais du contrôleur (30, 34).

10. Système de freinage selon l'une des revendications 7 à 9, **caractérisé en ce qu'**un premier dispositif de freinage, de préférence un dispositif de freinage de service, est formé par un moteur hydraulique (18) ou un moteur électrique destiné à entraîner un engrenage (16) de la roue (10) correspondante du mécanisme de déplacement à roues ou du pignon de chaîne correspondant du mécanisme de déplacement à chaînes, et de préférence une pompe hydraulique (21) ou un générateur, et un deuxième dispositif de freinage est formé par un accouplement associé à l'engrenage (16), de préférence un accouplement à disques multiples ou un frein à disques multiples.

11. Système de freinage selon l'une des revendications 7 à 10, **caractérisé en ce que** l'accouplement (22), notamment l'accouplement à disques multiples ou le frein à disques multiples, peut être actionné de manière hydraulique ou électrique par une vanne hydraulique (25) ou un aimant commandé(e) par les signaux électriques du moyen d'actionnement (11, 13) ou du contrôleur (34) interconnecté.

12. Système de freinage selon l'une des revendications 7 à 11, **caractérisé en ce qu'**il existe un (deuxième) moyen d'actionnement (13) pouvant être bloqué pour un frein de stationnement, lequel possède un capteur ou un commutateur (15) qui est connecté au deuxième dispositif de freinage, de préférence l'accouplement (22), ou à la vanne hydraulique (25) associée au deuxième dispositif de freinage ou encore au contrôleur (34) par le biais d'au moins une ligne de signaux électriques (35).
